# DEMANDE DE BREVET EUROPEEN

(11) **EP 1 085 236 A1**
(43) Date de publication de la demande: **21.03.2001**
(21) Numéro de dépôt: 00460051.6
(22) Date de dépôt: 13.09.2000
(51) Int. Cl.: F16G 11/02

(54) **Dispositif à manchon destiné à réaliser la jonction de deux brins parallèles en corde de fibres textiles**

(30) Priorité: 14.09.1999 FR 9911686
(71) Demandeur: Courant SA, 49000 Ecouflant (FR)
(72) Inventeur: Gaborit, Michel, 49480 Saint-Sylvain d'Anjou (FR)
(74) Mandataire: Maillet, Alain

(57) **Abrégé**

La présente invention concerne un dispositif comportant un manchon (2) qui est enfilé sur les deux brins (3, 4) et qui, dans cet état, subit un rétreint de façon à coincer fermement les deux brins, d'une part, l'un contre l'autre et, d'autre part, contre la surface latérale interne du manchon. Le manchon (2), une fois le rétreint effectué, est surmoulé avec une matière du genre élastomère.

Les deux brins (3, 4) appartiennent à la même corde de façon à créer, d'un côté du manchon, une boucle.

## Description

La présente invention concerne un dispositif à manchonnage destiné à réaliser la jonction de deux longueurs parallèles de cordes tressées en fibres textiles et, en particulier, destiné à réaliser une boucle d'oeilleton, le dispositif comportant, de préférence, un double manchonnage.

Les cordes de sécurité, auxquelles s'attachent les alpinistes, répondent à deux conditions : d'une part, la corde doit être peu extensible en utilisation courante pour que l'utilisateur conserve une bonne stabilité ; d'autre part, l'élasticité et l'allongement à la rupture doivent être aussi importants que possible afin d'obtenir une forte énergie de rupture atténuant au maximum le choc en cas de perte d'équilibre de l'utilisateur. Une corde de montagne doit pouvoir résister à trois efforts successifs correspondant à la chute d'un poids de 80 kg sur une hauteur de 5 mètres.

Suivant l'état de la technique, il est courant d'employer une virole ou un manchon d'extrémité pour relier deux tronçons de câbles ou d'élingues, ou pour former une boucle d'oeilleton sur un câble. Des oeilletons d'extrémité de ce type ont, dans bien des cas, supplanté le mode de jonction traditionnel par épissure à la main, notamment parce que l'épissure manuelle exige beaucoup de temps. De plus, l'adoption croissante de câbles en fils à très haute résistance a rendu la confection d'épissures beaucoup plus difficiles.

Dans le domaine de l'utilisation de viroles ou de manchons pour réaliser des jonctions ou des boucles de câbles à torons métalliques, on peut citer, à titre d'exemple, les documents suivants : FR-A-2 221 648, GB-A-1 440 798, US-A-4 136 987 et FR-A-2 544 041.

Dans le document FR-A-2 221 648, on enfile une virole, dont la section transversale correspond à peu près à deux sections du câble, on munit au moins un des brins du câble d'un manchon tubulaire de diamètre correspondant à celui du câble, on fait glisser la virole sur la paire de brins de façon qu'elle recouvre le ou les manchons et on lui fait subir un rétreint. Il en résulte que les deux brins de câble ne viennent pas en contact et, donc, que les torons constituant les brins ne sont pas détériorés par la force de pressage.

Dans le document GB-A-1 440 798, on enfile une virole ductile, dont la section transversale est initialement circulaire ou ovale, sur un câble revêtu d'un manchon de matière élastomère ; la virole subit un rétreint sur le revêtement caoutchouteux, ce qui déforme ce dernier et ce qui permet d'accrocher solidement, d'une part, le revêtement au câble et, d'autre part, le revêtement à la virole déformée, avec pour résultat une bonne fixation longitudinale de cette dernière au câble.

Dans le document US-A-4 136 987, pour former un oeilleton à l'extrémité d'un câble, on utilise encore une sorte de manchon constitué par un cylindre percé de deux trous, dans le sens longitudinal, qui sont enfilés sur les deux brins de l'oeilleton : ensuite on fait subir à cette virole un rétreint par pressage ou matriçage.

Les documents cités ci-dessus concernent particulièrement des câbles constitués de torons métalliques où la réalisation d'épissures est particulièrement malcommode. Mais l'utilisation de virole ou de manchon nécessite une machine de serrage très puissante, notamment pour éviter le glissement longitudinal lequel est relativement fréquent.

La présente invention concerne notamment des câbles ou cordes en fibres textiles pour lesquels on peut utiliser des machines moins puissantes et où il y a moins de glissement longitudinal.

Dans le document FR-A-2 544 041, afin de réaliser la liaison de brins juxtaposés de câbles en fibres textiles, on utilise une virole ou un manchon en aluminium de section ovale, qui est ensuite déformé par rétreint autour des brins juxtaposés. Il est prévu une tige enfilée dans le manchon entre les deux brins avant l'opération de rétreint, de manière à augmenter le serrage sur les brins sans augmenter la puissance de la presse. Deux manchons peuvent être associés, montés l'un derrière l'autre et séparés par une distance comprise entre la moitié et quatre fois la longueur d'un manchon.

Un objet de la présente invention consiste à prévoir un dispositif à manchon de liaison de deux brins parallèles juxtaposés de corde, de façon à réaliser notamment une boucle d'extrémité ou oeilleton. Dans la suite, on utilisera uniquement «manchon» pour désigner un manchon ou une virole.

Suivant une caractéristique de l'invention, il est prévu un dispositif à manchon qui comporte un manchon qui est enfilé sur les deux brins et qui, dans cet état, subit un rétreint de façon à coincer fermement les deux brins, d'une part, l'un contre l'autre et, d'autre part, contre la surface latérale interne du manchon, le manchon, une fois le rétreint effectué, est surmoulé au moyen d'une matière du genre élastomère.

Suivant une autre caractéristique, les deux brins appartiennent à la même corde de façon à créer, d'un côté du manchon, une boucle d'extrémité ou un oeilleton.

Suivant une autre caractéristique, le dispositif comprend deux manchons qui sont enfilés l'un derrière l'autre sur deux brins de même diamètre, la distance séparant les extrémités voisines des manchons étant au moins égale à 0,5 fois le diamètre des deux brins, dans cette position les deux manchons subissant un rétreint, l'ensemble des deux manchons étant ensuite surmoulé avec une matière du genre élastomère.

Suivant une autre caractéristique, la matière surmoulée recouvre les deux manchons et les brins entre ceux-ci.

Les caractéristiques de l'invention mentionnées ci-dessus, ainsi que d'autres, apparaîtront plus clairement à la lecture de la description suivante d'un exemple de réalisation, ladite description étant faite en se référant aux dessins ci-joints, parmi lesquels :
la Fig. la est une vue schématique en coupe transversale d'une presse de matriçage d'un manchon glissé autour de deux brins de corde, la presse étant encore ouverte,
la Fig. 1b est encore une vue schématique de la presse de la Fig. la, mais cette fois ci la presse étant fermée,
la Fig. 2 est une vue schématique en plan d'une boucle munie d'un manchon suivant l'invention,
la Fig. 3 est une vue schématique en plan d'une boucle munie de deux manchons, suivant l'invention, et
la Fig. 4 est une vue schématique d'une couverture réalisée sur deux manchons

La Fig. la représente, en coupe, les deux mors 1 d'une presse destinée à rétreindre un manchon 2 dans lequel sont logés les deux brins 3 et 4 d'une boucle de corde. Chaque mors 1 comporte une surface latérale interne en forme de demi-cercle. De préférence, le plan qui passe par les deux axes des brins 3 et 4 est perpendiculaire au plan de serrage entre les mors 1. Egalement de préférence, le manchon 2 a, à l'état initial, une forme ovale composée de deux demi-cercles dont les bouts sont réunis par deux petits segments parallèles au plan passant par les axes 3 et 4. Chaque demi-cercle du manchon, ou plus exactement chaque demi-cercle externe en tenant compte de l'épaisseur de la paroi du manchon, a un diamètre égal au diamètre des mors 1 de la presse, c'est-à-dire de la surface latérale interne du mors. Le matériau du manchon 2 est relativement ductile. D'autre part, les arêtes du manchon sont chanfreinées.

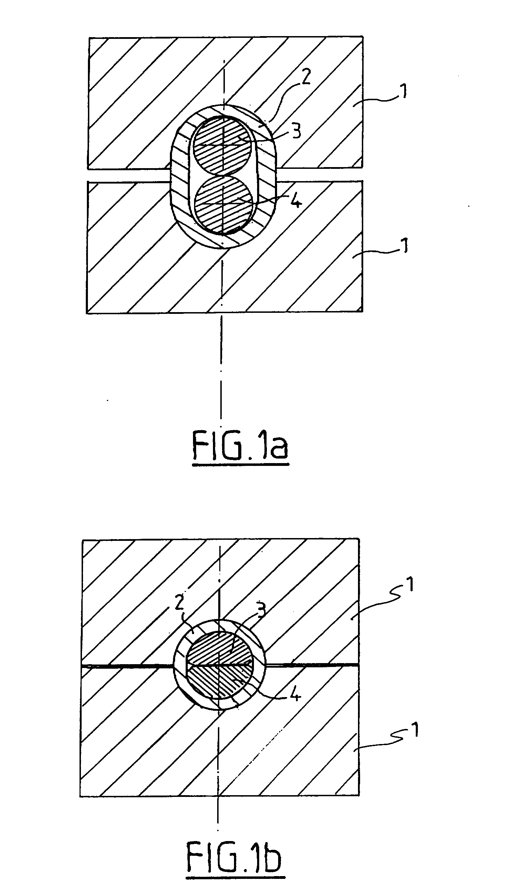

Lors du rétreint, les parois du manchon 2 sont déformées de façon que la surface latérale interne du manchon serre les brins 3 et 4, sans en blesser les torons de ceux-ci, la pression finale de la presse étant choisie de manière à juste supprimer la possibilité de glissement des brins par rapport au manchon. Comme le montre la Fig. 1b, on notera qu'il subsiste un petit intervalle entre les deux mors une fois le rétreint réalisé. Le contact du mors supérieur et du mors inférieur doit être évité, l'expérience a montré que le contact entre les deux mors ne permet pas d'assurer un résultat optimum.

La Fig. 1b montre schématiquement que pour provoquer le rétreint il faut appliquer une force F, par exemple au mors supérieur 1. Cette force F à appliquer dépend du manchon, le plus petit possible, des mors de serrage et de la corde. Le choix des caractéristiques de réglage permet d'éviter le glissement de la corde dans le ou les manchons et le cisaillement de la corde par le ou les manchons, pour une résistance éloignée de la résistance nominale de la corde.

Lors du rétreint, des parties du matériau du manchon, celles des petits segments parallèles de l'état initial, peuvent fluer entre les brins 3 et 4.

Les essais de traction réalisés au banc d'essai ont montré que le dispositif de liaison, fait dans les conditions mentionnées ci-dessus, s'opposait à tout glissement des deux brins 3 et 4, l'un par rapport à l'autre, pour des efforts de traction allant jusqu'à 90 % de la valeur de l'effort de traction entraînant la rupture de l'âme de la corde.

Toutefois, pour améliorer encore ces résultats, selon l'invention, il est prévu, une fois le manchon rétreint par la presse sur les brins, de le surmouler, dans cet état, par injection ou coulée d'un produit, tel qu'un produit thermoplastique, du caoutchouc, un élastomère, du polyuréthanne, etc. Le surmoulage en élastomère a notamment pour effet d'éviter l'usure des fibres de torons aux endroits de liaison avec le manchon, c'est-à-dire à ses deux extrémités.

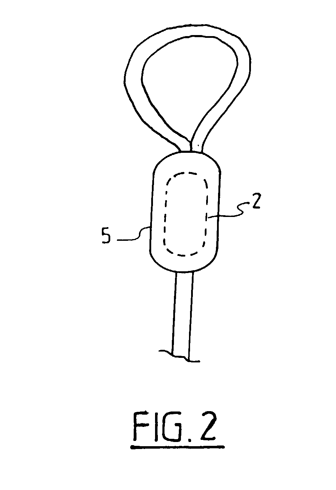

A la Fig. 2, on a montré une vue en plan d'une boucle réalisée selon l'invention au moyen d'un manchon 2 (montré en traits tirets) qui est recouvert par un surmoulage 5.

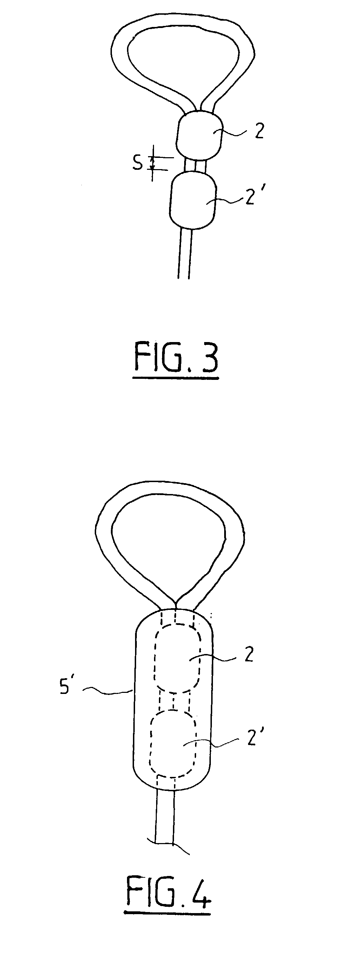

A la Fig. 3, on a montré une boucle sur laquelle sont montés deux manchons 2 et 2', situés à une distance S l'un de l'autre. La manchon 2' est, de préférence, identique au manchon 2 des Figs. 1 et 2, et réalisé de la même façon. Suivant l'invention, la distance S est au moins égale à 0,5 fois le diamètre de la corde. De préférence, la longueur de chaque manchon 2 et 2' est de l'ordre de S.

A la Fig. 4, comme à la Fig. 2, on a montré une boucle de corde avec (en traits tirets) les deux manchons 2 et 2', qui sont recouverts par un surmoulage commun 5'. A noter que ce surmoulage 5', comme le surmoulage 5, a pour effet de garantir les manchons contre les agressions extérieures.

La résistance à la rupture statique, obtenue, est proche de la charge de rupture de la corde.

## Revendications

1. Dispositif à manchon destiné à réaliser la jonction de deux brins parallèles en corde de fibres textiles, le dispositif comportant un manchon qui est enfilé sur les deux brins et qui, dans cet état, subit un rétreint de façon à coincer fermement les deux brins, d'une part, l'un contre l'autre et, d'autre part, contre la surface latérale interne du manchon, caractérisé en ce que le manchon, une fois le rétreint effectué, est surmoulé avec une matière du genre élastomère.

2. Dispositif à manchon suivant la revendication 1, caractérisé en ce que les deux brins appartiennent à la même corde de façon à créer, d'un côté du manchon, une boucle.

3. Dispositif à manchon suivant la revendication 1 ou 2, caractérisé en ce qu'il comprend deux manchons qui sont enfilés l'un derrière l'autre sur deux brins de même diamètre, la distance séparant les extrémités voisines des manchons étant au moins égale à 0,5 fois le diamètre des deux brins, dans cette position les deux manchons subissant un rétreint, l'ensemble des deux manchons étant ensuite surmoulé avec une matière du genre élastomère.

4. Dispositif à manchon suivant la revendication 3, caractérisé en ce que la matière surmoulée recouvre les deux manchons et les brins entre ceux-ci.
